# EUROPEAN PATENT SPECIFICATION

(11) **EP 0 664 362 B1**
(45) Date of publication and mention of the grant of the patent: **01.04.1998**
(21) Application number: 95300426.4
(22) Date of filing: 23.01.1995
(51) Int. Cl.: E03C 1/02, E03C 1/12

(54) **Couplable washing apparatus**
Koppelbares Waschapparat
Appareil de lavage couplable

(30) Priority: 21.01.1994 GB 9401161
(43) Date of publication of application: 26.07.1995
(73) Proprietor: Sage-Passant, Peter, Milton Keynes, MK11 3NF (GB)
(72) Inventor: Sage-Passant, Peter, Milton Keynes, MK11 3NF (GB)
(74) Representative: Raynor, Simon Mark

(56) References cited:
- GB-A- 855 306
- GB-A- 2 243 422
- US-A- 3 230 961
- US-A- 3 466 064

## Description

This invention relates to a couplable washing apparatus which allows fluid flow lines and a unit of catering equipment or a washing unit to be coupled.

Commercial catering establishments are subject to stringent health and hygiene requirements. Ease of access for cleaning purposes is a major consideration in the design of kitchens and catering equipment. It is increasingly common for units to be mobile, thereby allowing staff full access to clean both the equipment itself and the underlying floor area. It is also necessary to maintain the fabric of the building and this is aided by moving the unit so that the space behind can be retiled, regrouted, repainted or the like. Furthermore it is sometimes advantageous to be able to use an expensive unit, such as one containing a dishwasher, at a plurality of locations, at each of which it will require connection to a fixed services point.

However, not all catering equipment is readily made mobile. Sink units and ovens or hobs, for example, necessarily require connection to feed services, and it is these connections which have hitherto limited such units to static fixtures. Unfortunately, it is around these very fixtures that a large proportion of food handling is done, and thus it is essential that they, and the area around them, can be adequately cleaned. Flexible links between the services supply ports and the unit have been suggested, but these are cumbersome to accommodate when the unit is in place, prone to leakage and themselves pose not inconsiderable cleaning difficulties. It is a combination of these problems that makes the use of flexible links at least unattractive, and often unacceptable.

In my British Patent Application No. 9102466.1 (cf. the preamble of claim 1) I provide apparatus for coupling to a free-standing washing unit feed lines for hot and cold water and a waste line for waste water, the apparatus being characterised by:
(i) a wall-mountable connection unit supporting first and second service line base connector elements extending away from the wall and each for connection to a different hot and cold water service line at the wall and a waste line base connector element for connection to a waste line at the wall;
(ii) first and second satellite connector elements, each engageable in fluid-tight manner to a different one of the service line base connector elements, and a satellite waste line connector engageable in fluid-tight manner to the waste line base connector element, and each to be mounted, in use, to the washing unit, whereby the washing unit may be freely moved between an operational disposition adjacent the wall with the respective base and satellite connectors mutually engaged, and a de-coupled disposition away from the wall, with all the respective connectors disengaged; and
(iii) latching means for maintaining the washing unit in the operational disposition until release of the latching means allows transition to the de-coupled disposition.

This apparatus works well for units which are normally static in use, such as sinks. However when electrically powered washing apparatus is used in the unit, some vibration can be expected and this can be transmitted to and through the connector elements. This is undesirable.

Also, continuance of absolutely exact alignment between the satellite connector elements and the base connector elements is not always easy. The change in alignment may be only a matter of millimetres or less but it would be desirable to have a degree of freedom to ease connection in unforeseen circumstances.

It is an object to the present invention to provide an improved apparatus which will allow use in the free standing unit of such apparatus as dishwashers and the like, and will at least partially allow for vibration of the dishwasher.

According to the present invention there is provided a washing apparatus comprising a free standing washing unit incorporating an electrically powered washing appliance, said appliance being mounted to a movable frame, a disconnectible electrical connection device, liquid connection means for hot and/or cold water supply and for waste water, and a module attached to a surface to which mains water and domestic waste are permanently connectible, with which module said liquid connection means correspond and are releasably engageable, characterised in that at least one of said liquid connection means is resiliently mounted to a chassis element of said module by means of at least one resiliently deformable plastics washer adapted to accommodate transverse displacement of the respective connection means, and in that the chassis element of said module is dimensioned or configured to be resiliently deformable under load, further to accommodate vibrational movement of the washing apparatus.

Preferably the frame is provided with a table module mounted thereto.

Advantageously, detergent supply means and/or water softener supply means are removably mounted to said frame.

The washing appliance means may be a dish and/or glass washer, or a fabric washer, hereinafter referred to as a dishwasher.

Preferably, the unit also comprises a sink and the water inlets to the sink and to the dishwasher split within the unit, i.e. downstream of the connection module. The waste outlets of the sink and dishwasher may also combine upstream of the module.

Preferably the unit has a single operating lever to operate the latching means. For example, the single lever may be connected to sleeves on the satellite connectors of the hot and cold water supply lines. The single lever may be actuated by a pedal mechanism mounted on the frame.

A lockable means may be provided to prevent or allow operation of either the lever or the latching means.

Preferably the connection between the dishwasher and the connection unit includes an electrical earth connection, and preferably the washing unit is mounted on wheels, rollers or castors.

One such washer may be disposed on each side of the chassis element.
The or each washer may be composed of neoprene and may have a thickness in the region of 2mm.

Within the module, the waste outlet may connect to a generally U-shaped waste trap.

In this case the waste trap may be disposed to extend generally transverse to its direction of inlet so that its outlet is directed toward one or another side of the module.

The waste trap may be dimensioned to have an inlet leg longer than an outlet leg, thereby reducing the risk of waste spillage during disconnection.

In this case, the difference in length between the inlet and outlet legs may be between 5 and 40mm, preferably in the region of 35mm.

Within the module, the connection means for the hot and/or cold water supply are connected through flexible pipe means to a respective mains connection.

The or each connection may include a sieve means. This is intended to prevent builder's, plumbers and other waste material within external pipework from contact with the dishwasher or the connection means.

Embodiments of the invention will now be more particularly described by way of example, and with reference to the accompanying drawings, in which:
FIGURE 1 is a perspective view of a wall mountable connection unit for use in the present invention;
FIGURE 2 is a top plan view of the wall mountable connection unit, the satellite connector elements and a pedal actuated operating lever in a de-coupled disposition;
FIGURE 3 is a schematic front view of a unit incorporating a dish washer and embodying the present invention;
FIGURE 4 is a plan view of the unit shown in Figure 3;
FIGURE 5 is a plan view of an undercounter unit incorporating a dish washer or glass washer and illustrating another embodiment of the present invention; and
FIGURE 6 shows in more detail and in cross section one base unit connector embodying the present invention.

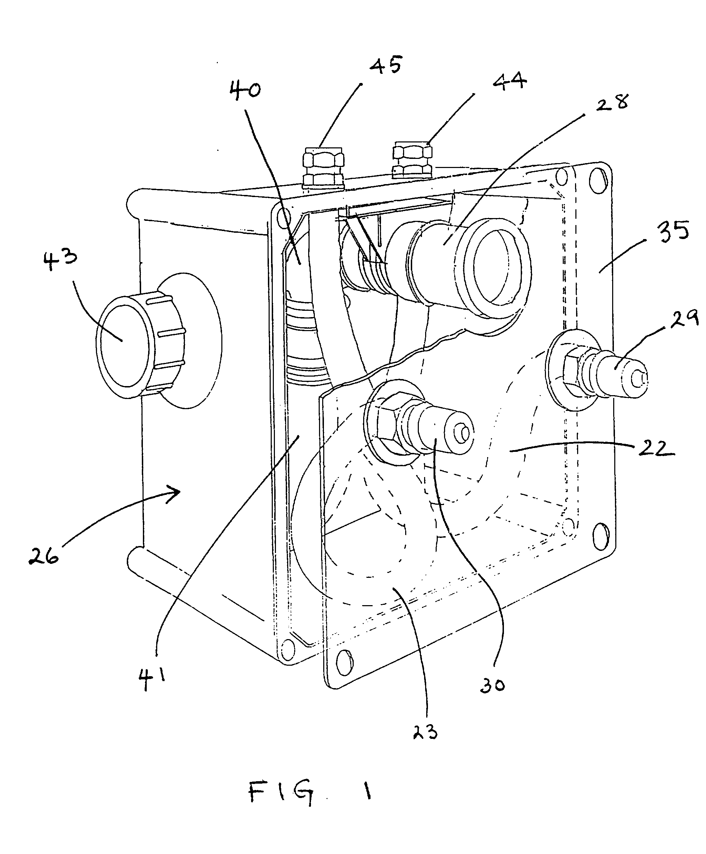

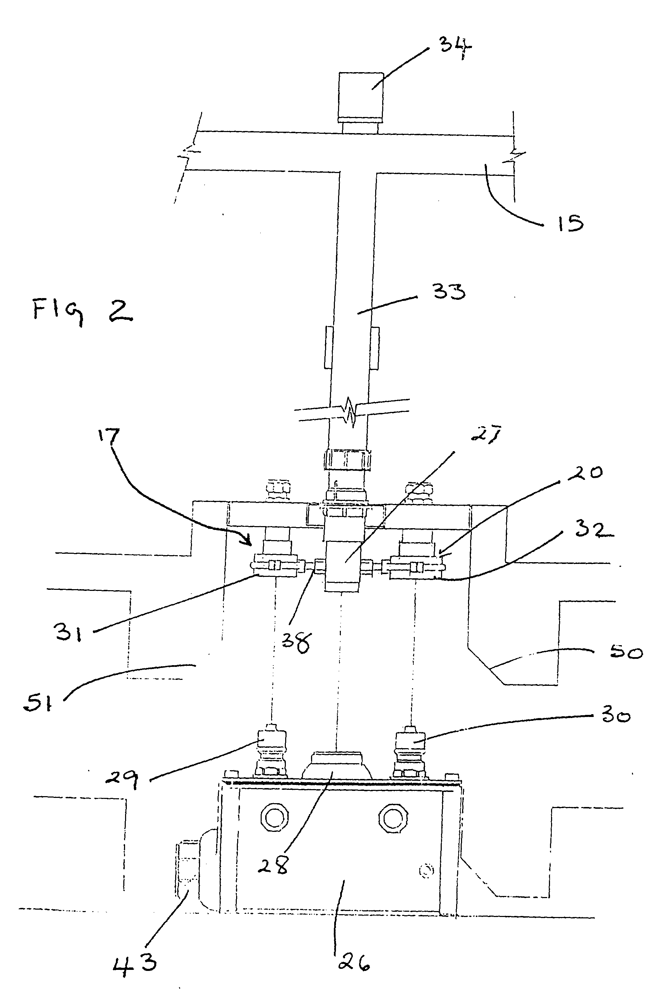

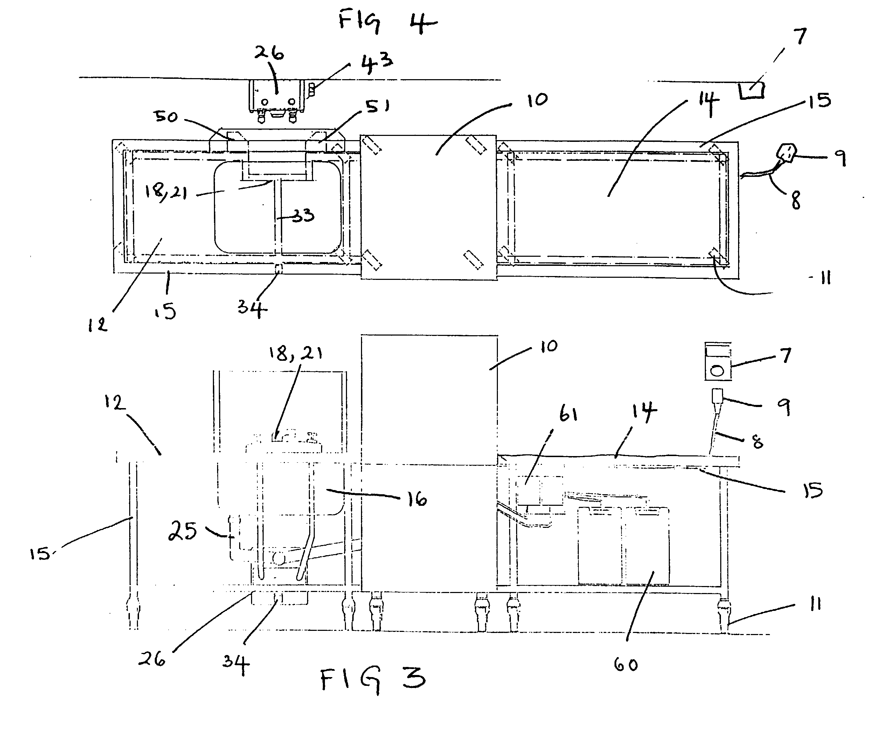

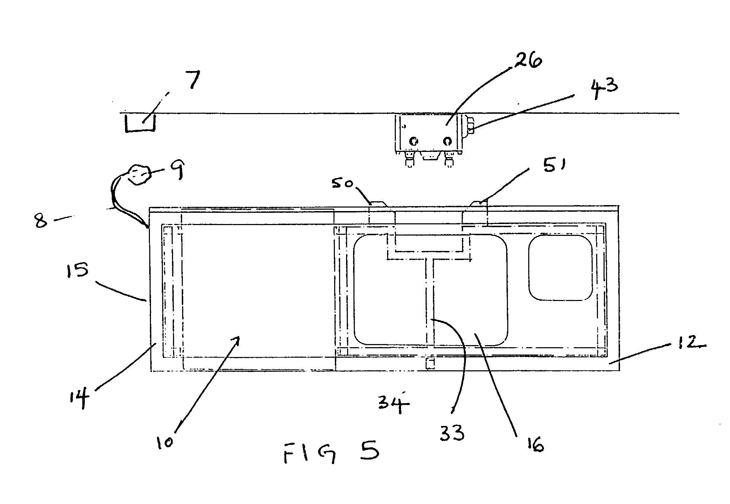

Referring to Figures 3 and 4, a standard sink unit top 12 has an underframe 15 provided with castors 11. Carried on the underframe 15 is a sink bowl 16, and satellite connector elements.

A table surface 14 is provided at an opposite end of the underframe 15 from the sink unit top 12. In this embodiment, a dish- or glass- washer 10 is mounted to the underframe 15 at a substantially median zone thereof, separating the sink unit top 12 from the table surface 14.

A wall socket 7 for electrical power may be engaged by an electrical plug 9 to feed power through cable 8 to the dishwasher (which term includes any electrically powerable washing apparatus). This connection is preferably provided on the "dry" table 14 side of the apparatus. The wall socket may include a residual current circuit device.

The assembly of washer 10 and table surfaces 12 and 14 is mobile on the castors 11, some or all of which may be lockable against rotation. A connection box 26 optionally beneath the sink bowl 16 has satellite connectors for hot and cold feed, and waste water conduits linking with the washer 10.

A second connection box may be provided. optionally at a height different from that of the first mentioned connection box 26, in cases where a dishwasher or glass washer and a sink unit are desired to be fed and wasted separately.

The assembly of washer 10 and tables 12 and 14 need not be arranged linearly. It would be possible to arrange one surface. and the equipment mounted to that part of the unit. at right angles to or at least at an angle to the general plane of the wall.

In the embodiment shown in Figure 3, there is included a supply of detergent, and/or water softener in containers 60, and a pump 61, preferably electrically driven, to transfer said detergent and/or water softener to the dishwater. The supply container or containers 60 are easily removable to aid refilling. The electrical connection to the pump 61 may be connected through supply lead 8.

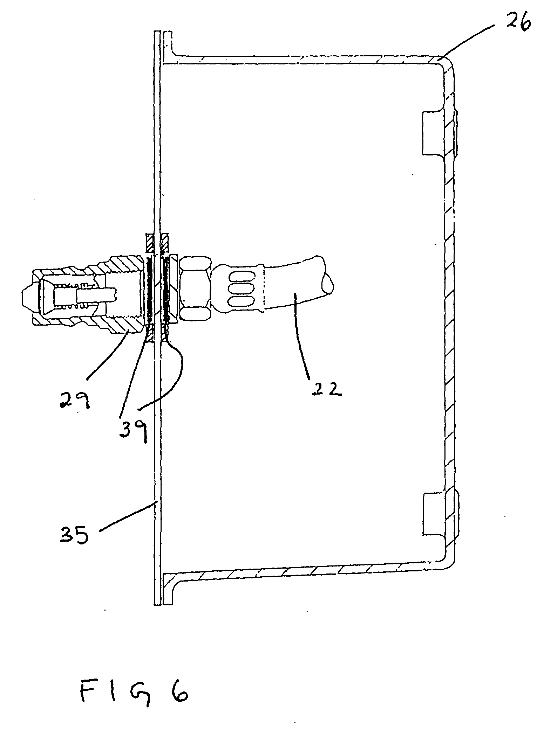

A further embodiment is shown in Figure 5. In this case, the dishwasher 10 is adapted to rest on or be mounted to a table surface 14 located to one side of the sink top surface 12.

In each embodiment, sink taps 18, 21, and sink waste 25 remain the same, as does the connection system to be described in more detail below.

Referring to Figures 1 and 2, a connection unit 26 is mounted to a wall. A base waste water connector 28 is disposed in a position superior to both a first base connector element 29 and a second base connector element 30 which are arranged horizontally in line. The base waste water connector 28 forms one limb of an elbow 40 which communicates with a trap 41 and a downstream elbow (not shown) from which connection may be made to an ongoing downstream waste pipe 43. It may be possible to connect connector 28 directly to the downstream waste pipe 43. This will save space in the unit 26, enabling it to be smaller and perhaps enabling closer connection of the unit to the wall. Nevertheless, a trap 41 will need to be connected in some point of the waste pipe 43, in order to comply with environmental regulations.

As can be seen from Figure 1. the elbows defining entry and exit to and from the trap 41 are at different heights. The differential is preferably in the region of 35mm with the waste inlet (from the dishwasher 10 and optionally the sink 16) being higher than the outlet to waste pipe 43. This allows disconnection of the washing unit without undue spillage of waste water in the system.

The trap 41 is mounted to exit in a direction transverse to the direction of entry. It may be left or right handed as required by existing or installed pipework. The unit 26 may be provided with an opening at each side, one of which is used and other is blanked off.

Base connectors 29 and 30 are double shut off couplings which automatically self-seal when disengaged from satellite connectors 17 and 20, in order to prevent escape of water from within respective supply lines to taps 18, 21.

A first satellite connector 17 communicates with a first sink tap 18 through a first water flow line, and likewise a second satellite connector 20 communicates with a second sink tap 21 through a second water flow line. The satellite waste connector 27 communicates with the drain hole 24 of the sink bowl 16, through a waste flow line 25.

Figure 2 shows how the base and satellite connectors engage when the sink unit is brought into abutment with the wall. Each satellite connector makes a push/press fit sealing engagement with its co-operating base connector.

Each of the satellite connectors 17 and 20 has a sleeve 31 and 32 respectively which engages over the spigot end of the corresponding base connector 29 and 30 for latching engagement of these connectors. The double shut-off connectors are well known in themselves, and the base and satellite connector portions are self sealing until such time as they are in latched engagement.

When bringing the sink unit into abutment with the wall, the unit is guided into its appointed position by co-operation between bevelled edges 50 and 51 on the back of the underframe 15 and the sides of the connection unit 26.

A link rod 33 actuated by a pedal 34 mounted on the underframe 15 connects via a yoke 38 to the sleeves 31 and 32 of the satellite connector elements 17 and 20.

In use full operational coupling of the unit to the services at the connection box 26 is achieved simply by pressing the unit into its appointed place against the wall, wherein the three satellite connections mounted to the unit make engagement with the corresponding three base connectors in the connection unit 26.

For cleaning around the sink unit, depression of the pedal 34 causes the link rod 33 to displace longitudinally thereby pulling the sleeves 31 and 32 axially away from the base connection spigots 29 and 30, to release both these two supply line connectors. Thus pulling the sink unit from the coupled disposition to its de-coupled disposition will not result in release of water to the floor.

To re-engage the sink unit with the connection unit 26 no manipulation of the pedal 34 is necessary. Instead simply moving the sink unit to the wall will achieve fresh latching engagement of the base connectors 28, 29 and 30 to respective satellite connectors.

Alternatively, a positive locking action may be required, by manipulation of the pedal 34. For example, to re-engage the unit with the connection unit 26, it may require depression of the pedal 34 to pull the sleeves 31 and 32 axially further onto the satellite connectors 17 and 20.

Once in position the pedal is released and the satellite connectors make latching engagement with the spigots29 and 30. In another embodiment (not shown) no manipulation of the pedal is necessary. Instead simply moving the sink unit into the wall will achieve fresh latching engagement of the supply line connectors.

A glass washer or a dishwasher, may be required to be operated to a strict pattern, and in this case, it may be advisable to provide a key or card operated lock to prevent unauthorised disconnection of the unit, e.g. in the middle of a cycle.

The infeed satellite connectors 29 and 30 are connected by flexible pipes 22 and 23 respectively to connections 44 and 45 for semipermanent connection to mains hot and cold water supply. The connections 44 and 45 may be in an upper face or a lower face of the connection unit 26 and four apertures therein may be provided, two of which are used and two of which are blanked off, as desired or practicable.

The infeed connectors 17 and 20, together with the outlet waste connector 27 may be provided with multifit fittings able to be connected to copper or plastics pipe.

The base unit connectors 29 and 30 may have strainers inserted upstream thereof to prevent debris from the mains pipework interfering with the action of the shut off valves or contaminating the dishwasher.

Referring now to Figure 6, one base connector is shown in more detail. For the sake of convenience this will be taken to be connector 29, fed by flexible pipe 22, but as may be seen from Figure 1, both connectors 29 and 30 are mounted to a chassis member 35 attached adjacent its corners to the rear of the connection box 26 and of material thin enough to have a degree of resilience but strong enough to withstand the forces generated upon reengagement of the base unit 26 with the washing unit. This springiness allows some degree of movement of the connectors in a transverse direction to take account of vibration set up by operation of the dishwasher and to allow connection of slightly imperfectly aligned connectors.

A further degree of transverse freedom is provided by mounting each connector, say 29, to the chassis 35 by means of neoprene washers 39, each of thickness approximately 2mm, and on located one each side of the chassis 35. This provision allows some transverse and also longitudinal movement of the connector.

It has been found that the technology described above may be applied to commercial dish washers. Hitherto there has been no obvious way of installing on a dish washer cabinet the connections, latching means and manually operated latching rod proposed above, whilst allowing for vibrations generated by operation of the dishwasher.

## Claims

1. A washing apparatus comprising a free standing washing unit incorporating an electrically powered washing appliance (10), said applicance being mounted to a movable frame (15), a disconnectible electrical connection device (7,9), liquid connection means for hot and/or cold water supply and for waste water, and a module (26) attached to a surface to which mains water and domestic waste are permanently connectible, with which module said liquid connection means correspond and are releasably engageable, characterised in that at least one of said liquid connection means is resiliently mounted to a chassis element (35) of said module (26) by means of at least one resiliently deformable plastics washer (39) adapted to accommodate transverse displacement of the respective connection means, and in that the chassis element (35) of said module is dimensioned or configured to be resiliently deformable under load further to accommodate vibrational movement of the washing apparatus.

2. A washing apparatus, according to claim 1, characterised in that the or each washer (39) is composed of neoprene of a thickness in the region of 2mm.

3. A washing apparatus, according to either claim 1 or claim 2, characterised in that the washing appliance means is a dish and/or glass washer, or a fabric washer.

4. A washing apparatus, according to any one of the preceding claims, characterised in that detergent supply means and/or water softener supply means (60) are removably mounted to said frame (15).

5. An apparatus as claimed in any of the preceding claims, characterised in that the unit also comprises a sink and the or each water inlet to the sink (16) and to the dishwasher split within the unit, i.e. downstream of the connection module, and in that the waste outlets of the sink and dishwasher combine upstream of the connection module.

6. An apparatus as claimed in any one of the preceding claims, characterised in that the unit has a single operating lever (33) to operate the latching means, which single lever may be connected to sleeves on the satellite connectors of the hot and cold water supply lines and be actuated by a pedal mechanism (34) mounted on the frame, and lockable means to prevent or allow operation of either the lever or the latching means.

7. An apparatus as claimed in any one of the preceding claims, characterised in that the waste outlet connects to a generally U-shaped waste trap (41) within the module, said waste trap being disposed to extend generally transverse to its direction of inlet so that its outlet (43) is directed toward one or another side of the module.

8. An apparatus as claimed in claim 7, characterised in that the waste trap is dimensioned to have an inlet leg longer than an outlet leg, to reduce the risk of waste spillage during disconnection, the difference in length between the inlet and outlet legs being preferably between 5 and 40mm, advantageously in the region of 35mm.

## Patentansprüche

1. Waschvorrichtung, umfassend eine freistehende Wascheinheit mit einem elektrisch getriebenen Waschgerät (10), das an einem bewegbaren Rahmen (15) montiert ist, eine trennbare elektrische Anschlußeinrichtung (7, 9), ein Flüssigkeitsanschlußmittel für Warm- und/oder Kaltwasserzufuhr und für Abwasser sowie ein an einer Fläche, mit welcher Leitungswasser und Haushaltsabwasser dauerhaft verbindbar sind, angebrachtes Modul (26), welchem Modul die Flüssigkeitsanschlußmittel entsprechen und mit welchem letztere trennbar koppelbar sind, dadurch gekennzeichnet, daß mindestens eines der Flüssigkeitsanschlußmittel an einem Chassiselement (35) des Moduls (26) mit Hilfe mindestens einer elastisch verformbaren Kunststoff-Dichtungsscheibe (39), die eine Querverschiebung des betreffenden Anschlußmittels aufzunehmen bzw. auszugleichen vermag, elastisch montiert ist, und daß das Chassiselement (35) des Moduls so dimensioniert oder konfiguriert ist, daß es unter Last elastisch verformbar ist, um weiterhin Schwingungsbewegung der Waschvorrichtung aufzunehmen bzw, auszugleichen.

2. Waschvorrichtung nach Anspruch 1, dadurch gekennzeichnet, daß die oder jede Dichtungsscheibe (39) aus Neopren mit einer Dicke im Bereich von 2 mm besteht.

3. Waschvorrichtung nach Anspruch 1 oder 2, dadurch gekennzeichnet, daß die Waschgeräteeinheit ein Geschirrund/oder Glaswäscher oder ein Gewebewäscher ist.

4. Waschvorrichtung nach einem der vorangehenden Ansprüche, dadurch gekennzeichnet, daß Reinigungsmittelzuführmittel und/oder Wasserenthärterzuführmittel (60) am Rahmen (15) abbaubar montiert sind.

5. Vorrichtung nach einem der vorangehenden Ansprüche, dadurch gekennzeichnet, daß die Einheit auch ein Spülbecken und den oder jeden Wassereinlaß zum Spülbecken (16) und zur Geschirrwäscherverzweigung innerhalb der Einheit, d.h. stromab des Anschlußmoduls, umfaßt und daß die Abwasserauslässe des Spülbeckens und des Geschirrwäschers stromauf des Anschlußmoduls miteinander vereinigt sind.

6. Vorrichtung nach einem der vorangehenden Ansprüche, dadurch gekennzeichnet, daß die Einheit einen einzigen Betätigungshebel (33) zum Betätigen der Verriegelungsmittel, welcher einzige Hebel mit Manschetten an den Satellitanschlüssen der Warm- und Kaltwasserzuführleitungen verbunden und durch einen am Rahmen montierten Pedalmechanismus (34) betätigbar sein kann, und arretierbare Mittel zum Verhindern oder Zulassen einer Betätigung entweder des Hebels oder der Verriegelungsmittel aufweist.

7. Vorrichtung nach einem der vorangehenden Ansprüche, dadurch gekennzeichnet, daß der Abwasserauslaß mit einer im wesentlichen U-förmigen Abwasserfalle (41) innerhalb des Moduls verbunden ist, welche Abwasserfalle sich im wesentlichen quer zu ihrer Einlaßrichtung erstreckend angeordnet ist, so daß ihr Auslaß (43) zur einen oder anderen Seite des Moduls gerichtet ist.

8. Vorrichtung nach Anspruch 7, dadurch gekennzeichnet, daß die Abwasserfalle so dimensioniert ist, daß sie einen Einlaßschenkel aufweist, der länger ist als ein Auslaßschenkel, um die Gefahr für einen Abwasseraustritt bei einer Trennung zu mindern, wobei die Längendifferenz zwischen den Einlaß- und Auslaßschenkeln bevorzugt zwischen 5 mm und 40 mm, vorteilhaft im Bereich von 35 mm, liegt.

## Revendications

1. Appareil de lavage comprenant une unité indépendante de lavage incorporant un instrument électrique (10) de lavage actionné électriquement, l'instrument étant monté sur un châssis mobile (15), un dispositif (7, 9) de connexion électrique qui peut être déconnecté, des moyens de connexion de liquide destinés à l'alimentation en eau chaude et/ou froide et à l'évacuation des eaux usées, et un module (26) fixé à une surface à laquelle peuvent être raccordées de manière permanente une alimentation principale en eau et une évacuation d'eaux usées, les moyens de connexion de liquide correspondant au module et pouvant coopérer de manière libérale avec lui, caractérisé en ce que l'un au moins des moyens de connexion de liquide est monté de façon élastique sur un élément (35) de châssis du module (26) à l'aide d'au moins une rondelle élastiquement déformable (39) en matière plastique destinée à permettre un déplacement transversal du moyen respectif de connexion, et en ce que l'élément de châssis (35) du module a une configuration ou des dimensions telles qu'il peut être déformé élastiquement sous l'action d'une force afin qu'il s'adapte au mouvement vibratoire de l'appareil de lavage.

2. Appareil de lavage selon la revendication 1, caractérisé en ce que la rondelle ou chaque rondelle (39) est composée de néoprène et a une épaisseur de l'ordre de 2 mm.

3. Appareil de lavage selon la revendication 1 ou 2, caractérisé en ce que le moyen à instrument de lavage est un appareil de lavage de vaisselle et/ou de verres ou d'étoffes.

4. Appareil de lavage selon l'une quelconque des revendications précédentes, caractérisé en ce que des moyens d'alimentation en détergent et/ou des moyens (60) d'alimentation en adoucissant de l'eau sont montés de façon amovible sur le châssis (15).

5. Appareil selon l'une quelconque des revendications précédentes, caractérisé en ce que l'unité comporte aussi un évier, et l'entrée ou chaque entrée de l'évier (16) et du lave-vaisselle est divisée dans l'unité, c'est-à-dire en aval du module de connexion, et en ce que les sorties des eaux usées de l'évier et du lave-vaisselle se combinent en amont du module de connexion.

6. Appareil selon l'une quelconque des revendications précédentes, caractérisé en ce que l'unité possède un seul levier d'actionnement (33) destiné à actionner les moyens de verrouillage, le levier unique pouvant être raccordé à des manchons sur les raccords satellites des canalisations d'alimentation en eau chaude et en eau froide et être commandé par un mécanisme à pédale (34) monté sur le châssis, et un moyen qui peut être bloqué afin qu'il empêche ou permette l'actionnement du levier ou des moyens de verrouillage.

7. Appareil selon l'une quelconque des revendications précédentes, caractérisé en ce que la sortie d'eaux usées se raccorde à un piège (41) à eaux usées ayant une forme générale en U et placé dans le module, ce piège étant destiné à être transversal de façon générale à la direction de son entrée de manière que sa sortie (43) soit dirigée vers l'un ou l'autre côté du module.

8. Appareil selon la revendication 7, caractérisé en ce que le piège à eaux usées a des dimensions telles qu'il comprend une branche d'entrée plus longue qu'une branche de sortie afin que le risque d'écoulement d'eaux usées pendant la déconnexion soit réduit, la différence de longueur entre les branches d'entrée et de sortie étant de préférence comprise entre 5 et 40 mm et avantageusement de l'ordre de 35 mm.
